# EUROPEAN PATENT APPLICATION

(11) **EP 4 760 794 A1**
(43) Date of publication of application: **17.06.2026**
(21) Application number: 25219283.6
(22) Date of filing: 28.11.2025
(51) Int. Cl.: H01M 4/13, H01M 10/04, H01M 10/0525, H01M 10/0583

(54) **ELECTRODE PLATE COMPOSITE, ELECTRODE ASSEMBLY, SECONDARY BATTERY, AND METHOD OF ELECTRODE ASSEMBLY**

(30) Priority: 28.11.2024 CN 202411726234
(71) Applicant: Ningde Amperex Technology Limited, Ningde, Fujian 352100 (CN)
(72) Inventor: LV, Feifei, Ningde City, Fujian Province, 352100 (CN); WU, Hua, Ningde City, Fujian Province, 352100 (CN)
(74) Representative: Kraus & Lederer PartGmbB

(57) **Abstract**

An electrode plate composite (10) includes a negative electrode plate (11), a first separator (12), a second separator (13), and a plurality of positive electrode plates (14). The negative electrode plate (11) includes a first current collector (111), a first active material layer (112), and a second active material layer (113). The first current collector (111) includes a first surface (1111) and a second surface (1112) arranged opposite to each other along a first direction (X). The first active material layer (112) is disposed on the first surface (1111), and the second active material layer (113) is disposed on the second surface (1112). The plurality of positive electrode plates (14) are alternately laminated on the first separator (12) and the second separator (13), and projections of the plurality of positive electrode plates (14) along the first direction (X) do not overlap.

## Description

### TECHNICAL FIELD

This application relates to the technical field of energy storage, in particular to an electrode plate composite, an electrode assembly, a secondary battery, and a method of the electrode assembly.

### BACKGROUND

During charge and discharge of existing secondary batteries, a negative electrode plate of a stacked battery tends to extend toward a side wall of a housing along a width direction of the negative electrode plate, and the extended negative electrode plate occupies space of the housing along the width direction to some extent. Thus, reserved extension space is required during design of secondary batteries, resulting in low energy density of the secondary batteries.

### SUMMARY

In view of this, this application provides an electrode plate composite, an electrode assembly, a secondary battery, and a method of the electrode assembly, which are conducive to reducing extension of a negative electrode plate.

A first aspect of this application provides an electrode plate composite. The electrode plate composite includes a negative electrode plate, a first separator, a second separator, and a plurality of positive electrode plates. The negative electrode plate includes a first current collector, a first active material layer, and a second active material layer. The first current collector includes a first surface and a second surface arranged opposite to each other along a first direction. The first direction is a thickness direction of the negative electrode plate. The first active material layer is disposed on the first surface, and the second active material layer is disposed on the second surface. The first separator is laminated on the first active material layer, and the second separator is laminated on the second active material layer. The plurality of positive electrode plates are alternately laminated on the first separator and the second separator, and projections of the plurality of positive electrode plates along the first direction do not overlap.

The negative electrode plate, the first separator, the second separator and the plurality of positive electrode plates are laminated into a whole. When the negative electrode plate extends, the negative electrode plate suppresses its own extension by bending corner regions in a width direction. Moreover, the electrode assembly can be prepared by repeatedly bending the electrode plate composite, which is conducive to improving the preparation efficiency of the electrode assembly.

In one or more of the above embodiments, materials of the first active material layer and the second active material layer include silicon.

In the above embodiments, when the materials of the first active material layer and the second active material layer include silicon, the negative electrode plate is more prone to extension, and the electrode plate composite can more effectively suppress the extension.

In one or more of the above embodiments, along a length direction of the electrode plate composite, a distance between two adjacent positive electrode plates is d1, satisfying: 0.4 mm ≤ d1 ≤ 1 mm.

In the above embodiments, when the electrode assembly is formed by repeatedly bending the electrode plate composite, 0.4 mm ≤ d1 can ensure that the negative electrode plate exceeds a size of the positive electrode plates, which is conducive to reducing the occurrence of lithium plating at an interface; and d1 ≤ 1 mm is conducive to improving the energy density of the electrode assembly formed by repeatedly bending the electrode plate composite.

The second aspect of this application provides an electrode assembly. The electrode assembly includes an electrode plate composite. The electrode plate composite includes a negative electrode plate, a first separator, a second separator, and a plurality of positive electrode plates. The negative electrode plate includes a first current collector, a first active material layer, and a second active material layer. The first current collector includes a first surface and a second surface arranged opposite to each other along a first direction. The first direction is a thickness direction of the negative electrode plate. The first active material layer is disposed on the first surface, and the second active material layer is disposed on the second surface. The first separator is laminated on the first active material layer, and the second separator is laminated on the second active material layer. The plurality of positive electrode plates are alternately laminated on the first separator and the second separator. The electrode assembly has straight segments and bent segments, and the straight segments and the bent segments are alternately connected. Along a thickness direction of the electrode assembly, each positive electrode plate is disposed between two adjacent straight segments.

In the electrode plate composite, the negative electrode plate, the first separator, the second separator, and the plurality of positive electrode plates are laminated into a whole. When the negative electrode plate extends, the negative electrode plate suppresses its own extension by bending corner regions in a width direction. Through the alternately connected straight segments and bent segments, the first separator and the second separator in the electrode assembly are alternately positioned on an inner side and an outer side of the negative electrode plate. When the negative electrode plate extends, the first separator and the second separator can further restrict the negative electrode plate at the bent segments, which is conducive to further reducing the extension of the negative electrode plate.

In one or more of the above embodiments, materials of the first active material layer and the second active material layer include silicon.

In the above embodiment, when the materials of the first active material layer and the second active material layer include silicon, the negative electrode plate is more prone to extension, and the electrode assembly can more effectively suppress the extension.

In one or more of the above embodiments, along the thickness direction of the electrode assembly, a projections of each of the positive electrode plate is located between projections of the bent segments.

In the above embodiment, the space occupied by the electrode assembly in a second direction can be reduced, and the lithium plating phenomenon at the connection between the straight segments and the bent segments can be alleviated.

The third aspect of this application provides a secondary battery. The secondary battery includes a housing and the electrode assembly provided in the second aspect of this application. The housing has an accommodation cavity, and the electrode assembly is disposed in the accommodation cavity.

In the electrode assembly, the negative electrode plate, the first separator, the second separator, and the plurality of positive electrode plates are laminated into a whole. When the negative electrode plate extends, the negative electrode plate suppresses its own extension by bending corner regions in a width direction. Through the alternately connected straight segments and bent segments, the first separator and the second separator in the electrode assembly are alternately positioned on an inner side and an outer side of the negative electrode plate. When the negative electrode plate extends, the first separator and the second separator can further restrict the negative electrode plate at the bent segments, which is conducive to further reducing the extension of the negative electrode plate. Thus, by reducing the extension of the negative electrode plate, the energy density of the secondary battery can be improved.

In one or more of the above embodiments, the secondary battery further comprises two single-sided electrode plates, and the two single-sided electrode plates are disposed on a side of a starting segment and a side of an ending segment of the electrode assembly respectively; and the side of the starting segment and the side of the ending segment of the electrode assembly being facing away from an interior of the electrode assembly; and each single-sided electrode plate includes a second current collector and a third active material layer, where the third active material layer is disposed on a surface that is of the second current collector and that faces towards the interior of the electrode assembly.

In the above embodiment, by omitting an active material layer on a side that is of the single-sided electrode plate and that faces away from the interior of the electrode assembly, the energy density of the secondary battery can be further improved.

In one or more of the above embodiments, along the thickness direction of the electrode assembly, the positive electrode plate is further disposed between one of the two single-sided electrode plates and the starting segment of the electrode assembly, and between the other of the two single-sided electrode plates and the ending segment of the electrode assembly. The secondary battery includes a third separator and a fourth separator; wherein at the starting segment of the electrode assembly, the third separator separates the positive electrode plate from the one of the two single-sided electrode plates, and at the ending segment of the electrode assembly, the fourth separator separates the positive electrode plate from the other of the two single-sided electrode plates. The housing is made of steel, and the two single-sided electrode plates have a negative polarity.

In the above embodiment, the secondary battery is a metal-shell battery. By applying the electrode assembly that can reduce the extension of the negative electrode plate to the metal-shell battery, the extension of the negative electrode plate in the metal-shell battery can be reduced, and the energy density of the metal-shell battery can be improved.

In one or more of the above embodiments, the housing is made of an aluminum laminated film, and the two single-sided electrode plates have a positive polarity.

In the above embodiment, the secondary battery is a pouch-type battery. By applying the electrode assembly that can reduce the extension of the negative electrode plate to the pouch-type battery, the energy density of the pouch-type battery can be improved.

A fourth aspect of this application provides a method of the electrode assembly for manufacturing the electrode assembly described in the second aspect of this application. The method includes: flattening the negative electrode plate, and laminating the first separator and the second separator on opposite sides of the negative electrode plate along the first direction, respectively; alternately laminating the plurality of positive electrode plates on the first separator and the second separator to form the electrode plate composite; and repeatedly bending the electrode plate composite to form the electrode assembly.

The negative electrode plate, the first separator, the second separator, and the plurality of positive electrode plates are laminated into a whole. When the negative electrode plate extends, the negative electrode plate suppresses its own extension by bending corner regions in a width direction. Through the alternately connected straight segments and bent segments, the first separator and the second separator in the electrode assembly are alternately positioned on an inner side and an outer side of the negative electrode plate. When the negative electrode plate extends, the first separator and the second separator can further restrict the negative electrode plate at the bent segments, which is conducive to further reducing the extension of the negative electrode plate.

In one or more of the above embodiments, the method includes: calendering or hot pressing the first separator and the second separator with the negative electrode plate.

In the above embodiments, the stability of the first separator and the second separator laminated on the negative electrode plate can be improved.

In one or more of the above embodiments, the method includes: calendering or hot pressing the plurality of positive electrode plates with the first separator and the second separator.

In the above embodiments, the stability of the plurality of positive electrode plates laminated on the electrode plate composite can be improved.

In one or more of the above embodiments, the method includes: along a length direction of the electrode plate composite, starting from a positive electrode plate located at a midpoint of the electrode plate composite, simultaneously repeatedly bending toward both ends of the electrode plate composite.

In the above embodiments, a speed of repeatedly bending the electrode plate composite can be increased, and the preparation efficiency of the electrode assembly can be improved.

### BRIEF DESCRIPTION OF DRAWINGS

FIG. 1 is a schematic diagram of a first separator and a second separator laminated on a negative electrode plate according to an embodiment of this application.
FIG. 2 is a schematic diagram of an electrode plate composite according to an embodiment of this application.
FIG. 3 is a schematic structural diagram of the negative electrode plate according to an embodiment of this application.
FIG. 4 is a schematic structural diagram of a positive electrode plate according to an embodiment of this application.
FIG. 5 is a schematic diagram of an electrode assembly according to an embodiment of this application.
FIG. 6 is a schematic structural diagram of a secondary battery according to a first embodiment of this application.
FIG. 7 is a schematic structural diagram of a secondary battery according to a second embodiment of this application.
FIG. 8 is a flowchart of preparing an electrode assembly according to an embodiment of this application.

### List of reference numerals:

10. Electrode plate composite; 101. Straight segment; 102. Bent segment; 11. Negative electrode plate; 111. First current collector; 1111. First surface; 1112. Second surface; 112. First active material layer; 113. Second active material layer; 12. First separator; 13. Second separator; 14. Positive electrode plate; 15. Negative tab; 16. Positive tab; 100. Electrode assembly; 200. Housing; 201. Accommodation cavity; 210. First housing; 220. Second housing; 211. First recess; 221. Second recess; 300. Single-sided electrode plate; 310. Second current collector; 320. Third active material layer; 400. Third separator; 500. Fourth separator; 1000. Secondary battery; X. First direction; Y. Second direction; and Z. Third direction.

### DETAILED DESCRIPTION

Technical solutions in embodiments of this application will be described below in conjunction with accompanying drawings in the embodiments of this application. Apparently, the described embodiments are merely some rather than all of the embodiments of this application.

It is hereby noted that when a component is considered to be "connected" to another component, it can be directly connected to another component or may be connected to another component through an intermediate component. When a component is considered to be "disposed on" another component, it can be set directly on another component or may be disposed on another component through an intermediate component.

Unless otherwise expressly specified, the term "a plurality of" as used herein means two or more.

The terms "first", "second", and the like are merely used to distinguish between different objects, and shall not be construed as any indication or implication of relative importance or any implicit indication of the quantity, particular sequence or primary-secondary relationship of the technical features indicated.

Unless otherwise defined, all technical and scientific terms used herein bear the same meanings as what is normally understood by a person skilled in the technical field of this application. The terms used herein in the specification of this application are merely for the purpose of describing specific embodiments and are not intended to limit this application. The term "and/or" used herein includes any and all combinations of one or more of the related listed items.

It should be understood that, considering the factors of actual machining tolerances, in the technical solution of this application, when two elements are arranged in parallel/perpendicular to each other in a same direction, a certain angle may exist between the two elements, with a tolerance of 0-±10% allowed. The two elements are greater than, equal to, or less than the allowed tolerance of 0-±10%.

An embodiment of this application provides an electrode plate composite. The electrode plate composite includes a negative electrode plate, a first separator, a second separator, and a plurality of positive electrode plates. The negative electrode plate includes a first current collector, a first active material layer, and a second active material layer. The first current collector includes a first surface and a second surface arranged opposite to each other along a first direction. The first direction is a thickness direction of the negative electrode plate. The first active material layer is disposed on the first surface, and the second active material layer is disposed on the second surface. The first separator is laminated on the first active material layer, and the second separator is laminated on the second active material layer. The plurality of positive electrode plates are alternately laminated on the first separator and the second separator.

The negative electrode plate, the first separator, the second separator and the plurality of positive electrode plates are laminated into a whole. When the negative electrode plate extends, the negative electrode plate suppresses its own extension by bending corner regions in a width direction. Moreover, the electrode assembly can be prepared by repeatedly bending the electrode plate composite, which is conducive to improving the preparation efficiency of the electrode assembly.

Some embodiments of this application will be described below in conjunction with the accompanying drawings. The following embodiments and features in the embodiments may be combined with each other without conflicts.

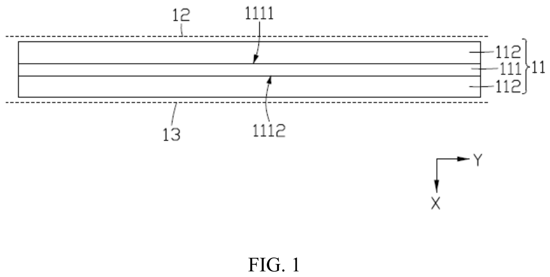

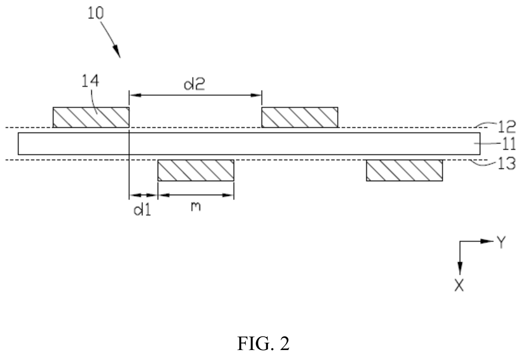

Referring to FIG. 1 and FIG. 2, an embodiment of this application provides an electrode plate composite 10. The electrode plate composite includes a negative electrode plate 11, a first separator 12, a second separator 13, and a plurality of positive electrode plates 14.

The negative electrode plate 11 includes a first current collector 111, a first active material layer 112, and a second active material layer 113.

The first current collector 111 includes a first surface 1111 and a second surface 1112, and the first surface 1111 and the second surface 1112 are arranged opposite to each other along a first direction X. The first direction X is a thickness direction of the negative electrode plate 11. The first active material layer 112 is disposed on the first surface 1111, and the second active material layer 113 is disposed on the second surface 1112. The first separator 12 is laminated on the first active material layer 112, and the second separator 13 is laminated on the second active material layer 113. That is, the first separator 12 and the second separator 13 are integrally laminated on the negative electrode plate 11.

In some embodiments, the first separator 12 is laminated on the first active material layer 112 by calendering or hot pressing, and the second separator 13 is laminated on the second active material layer 113 by calendering or hot pressing.

In some embodiments, along a second direction Y, the first separator 12 and the second separator 13 extend beyond the negative electrode plate 11. In some embodiments, along a direction opposite to the second direction Y, the first separator 12 and the second separator 13 extend beyond the negative electrode plate 11. The second direction Y is perpendicular to the first direction X.

The plurality of positive electrode plates 14 are alternately laminated on the first separator 12 and the second separator 13, and projections of the plurality of positive electrode plates 14 along the first direction X do not overlap. That is, any two adjacent positive electrode plates 14 are laminated on different ones of the first separator 12 and the second separator 13, respectively, and any two adjacent positive electrode plates 14 are spaced along the second direction Y.

In some embodiments, the positive electrode plates 14 are laminated on the first separator 12 or the second separator 13 by calendering or hot pressing.

In some embodiments, a distance between two adjacent positive electrode plates 14 along the second direction Y is equal.

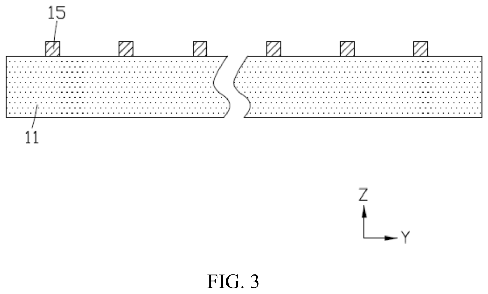

In some embodiments, referring to FIG. 2, the distance between two adjacent positive electrode plates 14 is d1, satisfying: 0.4 mm ≤ d1 ≤ 1 mm. When an electrode assembly 100, which is described below referring to FIG. 3, is formed by repeatedly bending the electrode plate composite 10, 0.4 mm ≤ d1 can ensure that the negative electrode plate 11 exceeds a size of the positive electrode plates 14, which is conducive to reducing the occurrence of lithium plating at an interface; and D1 ≤ 1 mm is conducive to improving the energy density of the electrode assembly 100 formed by repeatedly bending the electrode plate composite 10.

The negative electrode plate 11, the first separator 12, the second separator 13, and the plurality of positive electrode plates 14 described above are laminated into a whole. When the negative electrode plate 11 extends, the negative electrode plate 11 suppresses its own extension by bending corner regions in a width direction. Moreover, the electrode assembly 100 can be prepared by repeatedly bending the electrode plate composite 10, which is conducive to improving the preparation efficiency of the electrode assembly 100.

In some embodiments, materials of the first active material layer 112 and the second active material layer 113 include silicon. When the materials of the first active material layer 112 and the second active material layer 113 include silicon, the negative electrode plate 11 is more prone to extension, and the electrode plate composite 10 or the electrode assembly 100 prepared from the electrode plate composite 10 can more effectively suppress the extension. In other embodiments, the materials of the first active material layer 112 and the second active material layer 113 include graphite.

In some embodiments, referring to FIG. 3, the electrode plate composite 10 includes negative tabs 15, and the negative tabs 15 are connected to the negative electrode plate 11 and extend out of the negative electrode plate 11 along a third direction Z. The first direction X, the second direction Y, and the third direction Z are mutually perpendicular to each other.

In some embodiments, a plurality of negative tabs 15 are provided, and the plurality of negative tabs 15 are arranged at intervals. In some embodiments, a distance between two adjacent negative tabs 15 is equal. It is conducive to making the projections of the plurality of negative tabs 15 along the first direction X overlap after the electrode plate composite 10 is repeatedly bent.

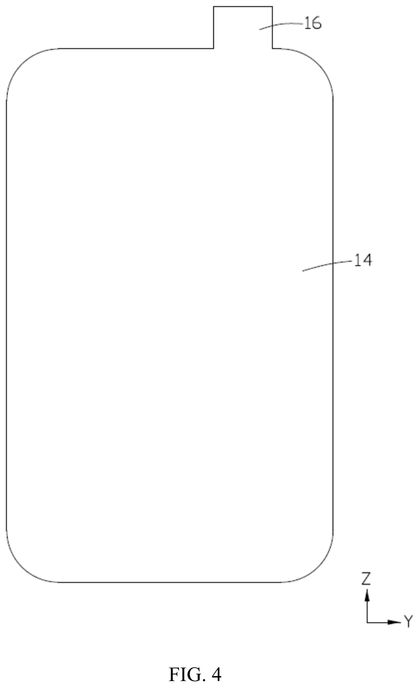

In some embodiments, referring to FIG. 4, the electrode plate composite 10 includes positive tabs 16, and the positive tabs 16 are connected to the positive electrode plates 14 and extend out of the positive electrode plates 14 along the third direction Z.

In some embodiments, one positive electrode plate 14 has one positive tab 16.

In some embodiments, along the first direction X, the projections of the positive tabs 16 are separated from the projections of the negative tabs 15, which is conducive to reducing interference between the positive tabs 16 and the negative tabs 15.

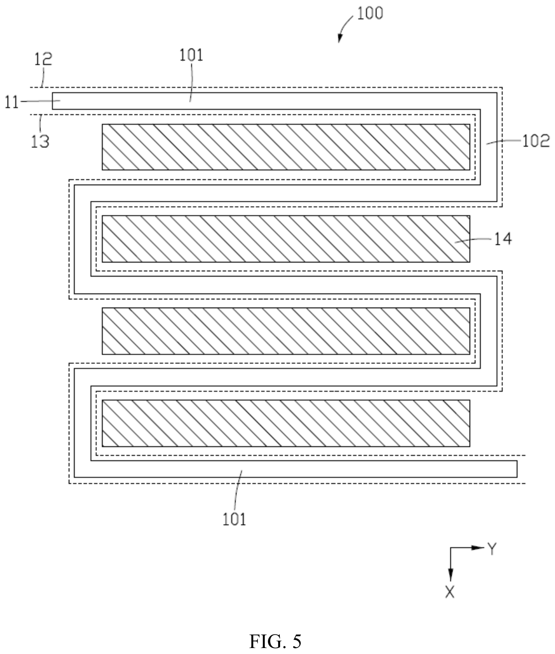

Referring to FIG. 5, an embodiment of this application provides an electrode assembly 100. The electrode assembly includes the aforementioned electrode plate composite 10. In the electrode plate composite 10, the negative electrode plate 11, the first separator 12, the second separator 13, and the plurality of positive electrode plates 14 are laminated into a whole. When the negative electrode plate 11 extends, the negative electrode plate 11 suppresses its own extension by bending corner regions in a width direction.

In some embodiments, the electrode assembly 100 is formed by repeatedly bending the electrode plate composite 10, which is conducive to improving the preparation efficiency of the electrode assembly 100.

The electrode assembly 100 has straight segments 101 and bent segments 102, and the straight segments 101 and the bent segments 102 are alternately connected. Along a thickness direction of the electrode assembly 100, each positive electrode plate 14 is disposed between two adjacent straight segments 101. Through the alternately connected straight segments 101 and bent segments 102, the first separator 12, and the second separator 13 in the electrode assembly 100 are alternately positioned on an inner side and an outer side of the negative electrode plate 11. When the negative electrode plate 11 extends, the first separator 12, and the second separator 13 can further restrict the negative electrode plate 11 at the bent segments 102, which is conducive to further reducing the extension of the negative electrode plate 11.

In some embodiments, the straight segments 101 include a starting segment and an ending segment of the electrode assembly 100.

In some embodiments, along the third direction Z or a direction opposite to the third direction Z, the negative electrode plate 11 extends beyond the positive electrode plates 14.

In some embodiments, along the thickness direction of the electrode assembly 100, a projection of each of the positive electrode plate 14 is located between projections of the bent segments 102, which is conducive to reducing the space occupied by the electrode assembly 100 in the second direction Y, and alleviating the lithium plating phenomenon at the connection between the straight segment 101 and the bent segment 102.

In some embodiments, along the thickness direction of the electrode assembly 100, projections of the first separator 12 and the second separator 13 cover the negative electrode plate 11 and the positive electrode plates 14, which is conducive to reducing the risk of short circuit caused by direct contact between the negative electrode plate 11 and the positive electrode plates 14.

In some embodiments, the negative tabs 15 are located on different straight segments 101. Along the thickness direction of the electrode assembly 100, all the projections of the plurality of negative tabs 15 overlap, which is conducive to improving the convenience of gathering the plurality of negative tabs 15.

In some embodiments, along the thickness direction of the electrode assembly 100, all the projections of the plurality of positive tabs 16 overlap, which is conducive to improving the convenience of gathering the plurality of positive tabs 16.

In some embodiments, along the thickness direction of the electrode assembly 100, the projections of the positive tabs 16 are separated from the projections of the negative tabs 15, which is conducive to reducing interference between the positive tabs 16 and the negative tabs 15 during gathering, thereby further improving the convenience of separately gathering the plurality of positive tabs 16 and the plurality of negative tabs 15.

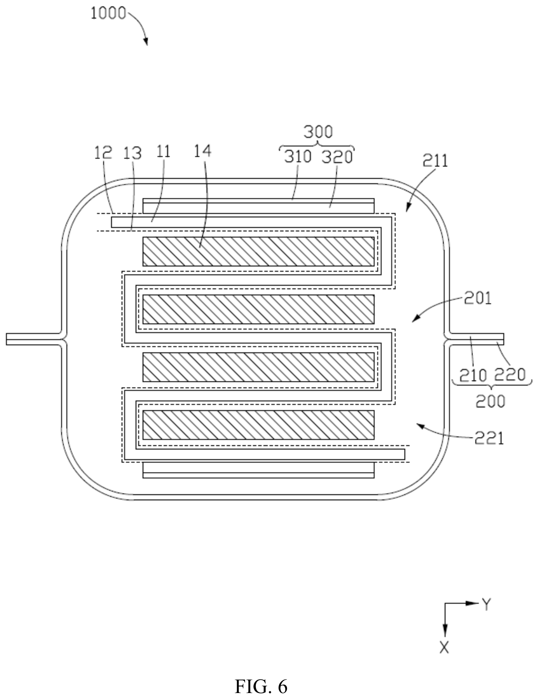

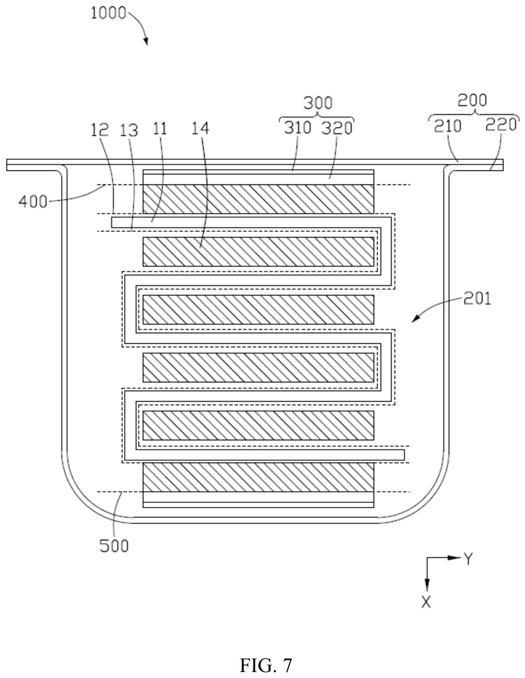

Referring to FIG. 6 and FIG. 7, an embodiment of this application provides a secondary battery 1000. The secondary battery includes a housing 200 and the aforementioned electrode assembly 100. The housing 200 has an accommodation cavity 201, and the electrode assembly 100 is disposed in the accommodation cavity 201. In the electrode assembly 100, the negative electrode plate 11, the first separator 12, the second separator 13, and the plurality of positive electrode plates 14 are laminated into a whole. When the negative electrode plate 11 extends, the negative electrode plate 11 suppresses its own extension by bending the corner regions along a width direction. Through the alternately connected straight segments 101 and bent segments 102, the first separator 12, and the second separator 13 in the electrode assembly 100 are alternately positioned on an inner side and an outer side of the negative electrode plate 11. When the negative electrode plate 11 extends, the first separator 12, and the second separator 13 can further restrict the negative electrode plate 11 at the bent segments 102, which is conducive to further reducing the extension of the negative electrode plate 11. Thus, by reducing the extension of the negative electrode plate 11, the energy density of the secondary battery 1000 can be improved.

In some embodiments, the housing 200 includes a first housing 210 and a second housing 220, and the first housing 210 and the second housing 220 are connected to each other to form the accommodation cavity 201.

In some embodiments, referring to FIG. 6, the first housing 210 has a first recess 211, and the second housing 220 has a second recess 221. The first recess 211 and the second recess 221 are arranged opposite to each other to form the accommodation cavity 201.

In some embodiments, the starting segment of the electrode assembly 100 is disposed in the first recess 211, and the ending segment of the electrode assembly 100 is disposed in the second recess 221. Thus, ends of the first separator 12 and the second separator 13 can be away from a connection region of the first housing 210 and the second housing 220, which is conducive to reducing the risk of the first separator 12 and the second separator 13 entering the connection region of the first housing 210 and the second housing 220 and causing an encapsulation failure between the first housing 210 and the second housing 220.

In some embodiments, the secondary battery 1000 further comprises two single-sided electrode plates 300, and the two single-sided electrode plates 300 are disposed on a side of the starting segment and a side of the ending segment of the electrode assembly 100 respectively; and the side of the starting segment and the side of the ending segment of the electrode assembly 100 being facing away from the interior of the electrode assembly 100,. The single-sided electrode plate 300 includes a second current collector 310 and a third active material layer 320, and the third active material layer 320 is disposed on a surface that is of the second current collector 310 and that faces towards the interior of the electrode assembly 100. By omitting an active material layer on a side of the single-sided electrode plate 300 facing away from the interior of the electrode assembly 100, the energy density of the secondary battery 1000 can be further improved.

In some embodiments, the housing 200 is made of an aluminum laminated film, and the two single-sided electrode plates 300 have a positive polarity. In this case, the secondary battery 1000 is a pouch-type battery. By applying the electrode assembly 100 that can reduce the extension of the negative electrode plate 11 to the pouch-type battery, the energy density of the pouch-type battery can be improved.

In some embodiments, when the secondary battery 1000 is a pouch-type battery, the negative tabs 15 and the positive tabs 16 extend out of the housing 200 after being gathered, respectively.

Referring to FIG. 6, in some embodiments, when the two single-sided electrode plates 300 have the positive polarity, along the thickness direction of the electrode assembly 100, the projection of the negative electrode plate 11 covers the projection of the single-sided electrode plate 300.

Referring to FIG. 7, in some embodiments, along the thickness direction of the electrode assembly 100, the positive electrode plate 14 is further disposed between the one of the two single-sided electrode plates 300 and the starting segment of the electrode assembly 100, and between the other of the two single-sided electrode plates 300 and the ending segment of the electrode assembly 100. The secondary battery 1000 includes a third separator 400 and a fourth separator 500. At the starting segment of the electrode assembly 100, the positive electrode plate 14 and the one of the two single-sided electrode plates 300 are separated by the third separator 400, and at the ending segment of the electrode assembly 100, the positive electrode plate 14 and the other of the two single-sided electrode plates 300 are separated by the fourth separator 500. The housing 200 is made of steel, and the two single-sided electrode plates 300 have a negative polarity. In this case, the secondary battery 1000 is a metal-shell battery. By applying the electrode assembly 100 that can reduce the extension of the negative electrode plate 11 to the metal-shell battery, the extension of the negative electrode plate 11 in the metal-shell battery can be reduced, and the energy density of the metal-shell battery can be improved.

In some embodiments, when the secondary battery 1000 is a metal-shell battery, the negative tabs 15 are electrically connected to the housing 200 after being gathered, and the positive tabs 16 extend out of the housing 200 after being gathered, and are insulated from the housing 200.

Referring to FIG. 7, in some embodiments, when the polarity of the two single-sided electrode plates 300 have the negative polarity, the projection of the single-sided electrode plate 300 covers the projection of the positive electrode plate 14 along the thickness direction of the electrode assembly 100.

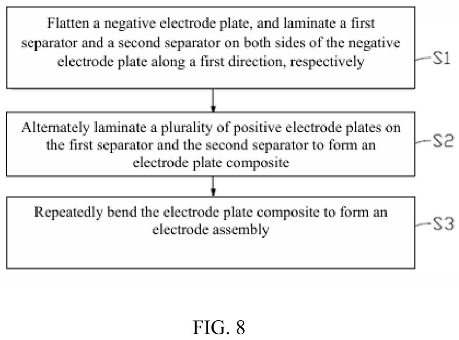

Referring to FIG. 8, an embodiment of this application provides a method of an electrode assembly 100 for manufacturing the aforementioned electrode assembly 100. The method includes the following steps:

S1: Flattening the negative electrode plate 11, and laminating the first separator 12 and the second separator 13 on opposite sides of the negative electrode plate 11 along the first direction X, respectively, to form a electrode plate composite 10.

S2: Alternately laminating the plurality of positive electrode plates 14 on the first separator 12 and the second separator 13 to form the electrode plate composite 10.

S3: Repeatedly bending the electrode plate composite 10 to form an electrode assembly 100.

In some embodiments, step S1 includes step S101: Calendering or hot pressing the first separator 12 and the second separator 13 with the negative electrode plate 11, which is conducive to improving the stability of the first separator 12 and the second separator 13 laminated on the negative electrode plate 11.

In some embodiments, in step S2, performing die-cutting to obtain the plurality of positive electrode plates 14.

In some embodiments, in step S2, calendering or hot pressing the plurality of positive electrode plates 14 with the first separator 12 and the second separator 13, which is conducive to improving the stability of the plurality of positive electrode plates 14 laminated on the electrode plate composite 10.

In some embodiments, step S2 includes step S201: setting a distance between two adjacent positive electrode plates 14 as d1.

In some embodiments, in step S201, determining a position of a first positive electrode plate 14, and laminating the first positive electrode plate 14 on one of the first separator 12 and the second separator 13, without limitation. Locating a position spaced apart from the first positive electrode plate 14 by d1 by CCD on the other of the first separator 12 and the second separator 13, and laminating a second positive electrode plate 14 at the position. By analogy, along a second direction Y, locating a position spaced apart from the previous positive electrode plate 14 by d1 on a different side of the previous positive electrode plate 14 (referring to FIG. 2), and laminating the subsequent positive electrode plate 14 at this position. In this case, the position of the subsequent positive electrode plate 14 is determined based on the position of the adjacent previous positive electrode plate 14, which is conducive to improving the consistency of the distance between two adjacent positive electrode plates 14.

In some embodiments, in step S201, dividing the plurality of positive electrode plates 14 according to whether the positive electrode plates are laminated on the first separator 12 or the second separator 13. Along the second direction Y, determining the position of the first positive electrode plate 14 on a first side of the negative electrode plate 11, where the first side of the negative electrode plate 11 may be the side of the negative electrode plate 11 laminated with the first separator 12. Along the second direction Y, on a second side of the negative electrode plate 11, locating a position spaced apart from the first positive electrode plate 14 of the first side by d1 via CCD, and laminating the first positive electrode plate 14 of the second side at this position, where the second side of the negative electrode plate 11 may be the side of the negative electrode plate 11 laminated with the second separator 13. Respectively locating positions, which are apart from the first positive electrode plate 14 on the corresponding sides by d2, on the first side and the second side by CCD (referring to FIG. 2), laminating the second positive electrode plate 14 on the first side or the second side at the corresponding position, where d2 = d1 * 2 + m, and m is a size of the positive electrode plate 14 along the second direction Y. By analogy, along the second direction Y, respectively locating positions, which are spaced apart from the previous positive electrode plate 14 on the corresponding sides by d2, on the first side and the second side, and laminating the subsequent positive electrode plate 14 on the first side or the second side at the corresponding position. In this case, after determining the positions of the first positive electrode plates 14 on different sides of the negative electrode plate 11, the lamination positions of the positive electrode plates 14 on different sides of the negative electrode plate 11 can be determined simultaneously, which is conducive to improving the efficiency of laminating the plurality of positive electrode plates 14 on the first separator 12 and the second separator 13, respectively.

In some embodiments, in step S201, 0.4 mm ≤ d1 ≤ 1 mm. 0.4 mm ≤ d1 can ensure that the negative electrode plate 11 exceeds the size of the positive electrode plate 14, which is conducive to reducing the occurrence of lithium plating at an interface; d1 ≤ 1 mm is conducive to improving the energy density of the electrode assembly 100 formed by subsequently repeatedly bending the electrode plate composite 10.

In some embodiments, step S2 includes step S202: Along a thickness direction of the electrode plate composite 10, laminating single-sided electrode plates 300 at positions that are of the electrode plate composite 10 and that are opposite to the first positive electrode plate 14 and the last positive electrode plate 14.

In some embodiments, in step S202, when the single-sided electrode plates 300 are laminated on the electrode plate composite 10, laminating a surface that is of a second current collector 310 and that is provided with a third active material layer 320 on the electrode plate composite 10.

In some embodiments, in step S202, calendering or hot pressing the single-sided electrode plates 300 and the electrode plate composite 10.

In some embodiments, step S3 includes step S301: Along a length direction of the electrode plate composite 10, starting from a positive electrode plate 14 located at a midpoint of the electrode plate composite 10, simultaneously repeatedly bending toward both ends of the electrode plate composite. Thus, the speed of repeatedly bending the electrode plate composite 10 can be increased, and the preparation efficiency of the electrode assembly 100 can be improved.

In some embodiments, in step S301, when the number of the positive electrode plates 14 is even, the positive electrode plate 14 located at the midpoint of the electrode plate composite 10 refers to: two positive electrode plates 14 closest to the midpoint of the electrode plate composite 10.

In some embodiments, in step S301, when the number of the positive electrode plates 14 is odd, the positive electrode plate 14 located at the midpoint of the electrode plate composite 10 refers to: a positive electrode plate 14 arranged at the midpoint of the electrode plate composite 10.

In addition, a person of ordinary skill in the art understands that the above embodiments are merely intended to illustrate this application, but not intended to limit this application. Any and all appropriate modifications and changes made to the embodiments without departing from the substantial scope of this application still fall within the protection scope of this application.

## Claims

1. An electrode plate composite (10), comprising:
a negative electrode plate (11), wherein the negative electrode plate (11) comprises a first current collector (111), a first active material layer (112), and a second active material layer (113), wherein the first current collector (111) comprises a first surface (1111) and a second surface (1112) arranged opposite to each other along a first direction (X), the first direction (X) is a thickness direction of the negative electrode plate (11), the first active material layer (112) is disposed on the first surface (1111), and the second active material layer (113) is disposed on the second surface (1112);
a first separator (12), wherein the first separator (12) is laminated on the first active material layer (112);
a second separator (13), wherein the second separator (13) is laminated on the second active material layer (113); and
a plurality of positive electrode plates (14), wherein the plurality of positive electrode plates (14) are alternately laminated on the first separator (12) and the second separator (13), and projections of the plurality of positive electrode plates (14) along the first direction (X) do not overlap.

2. The electrode plate composite (10) according to claim 1, **characterized in that** materials of the first active material layer (112) and the second active material layer (113) comprise silicon.

3. The electrode plate composite (10) according to claim 1 or 2, **characterized in that**, along a length direction of the electrode plate composite (10), a distance between two adjacent positive electrode plates (14) is d1, satisfying: 0.4 mm ≤ d1 ≤ 1 mm.

4. An electrode assembly (100), **characterized in that** the electrode assembly (100) comprises the electrode plate composite (10) according to any one of claims 1 to 3,
wherein the electrode assembly (100) has straight segments (101) and bent segments (102), and the straight segments (101) and the bent segments (102) are alternately connected; and along a thickness direction of the electrode assembly (100), each positive electrode plate (14) is disposed between two adjacent straight segments (101).

5. A method for manufacturing the electrode assembly (100) according to claim 4, **characterized in that** the method comprises:
flattening the negative electrode plate (11), and laminating the first separator (12) and the second separator (13) on opposite sides of the negative electrode plate (11) along the first direction (X), respectively;
alternately laminating the plurality of positive electrode plates (14) on the first separator (12) and the second separator (13) to form the electrode plate composite (10); and
repeatedly bending the electrode plate composite (10) to form the electrode assembly (100).

6. The method according to claim 5, **characterized in that** the method comprises: calendering or hot pressing the first separator (12) and the second separator (13) with the negative electrode plate (11).

7. The method according to claim 5 or 6, **characterized in that** the method comprises: calendering or hot pressing the plurality of positive electrode plates (14) with the first separator (12) and the second separator (13).

8. The method according to any one of claims 5 to 7, **characterized in that** the method comprises: along the length direction of the electrode plate composite (10), starting from the positive electrode plate (14) located at a midpoint of the electrode plate composite (10), simultaneously repeatedly bending toward both ends of the electrode plate composite (10).

9. A secondary battery (1000), **characterized in that** the secondary battery (1000) comprises:
a housing (200), wherein the housing (200) has an accommodation cavity (201); and
the electrode assembly (100) according to claim 4, wherein the electrode assembly (100) is disposed in the accommodation cavity (201).

10. The secondary battery (1000) according to claim 9, **characterized in that** the secondary battery (1000) further comprises two single-sided electrode plates (300), and the two single-sided electrode plates (300) are disposed on a side of a starting segment and a side of an ending segment of the electrode assembly (100) respectively; and the side of the starting segment and the side of the ending segment of the electrode assembly (100) being facing away from an interior of the electrode assembly (100); and each single-sided electrode plate (300) comprises a second current collector (310) and a third active material layer (320), wherein the third active material layer (320) is disposed on a surface of the second current collector (310) that faces towards the interior of the electrode assembly (100).

11. The secondary battery (1000) according to claim 10, **characterized in that**, along the thickness direction of the electrode assembly (100), the positive electrode plate (14) is further disposed between one of the two single-sided electrode plates (300) and the starting segment of the electrode assembly (100), and between the other of the two single-sided electrode plates (300) and the ending segment of the electrode assembly (100); the secondary battery (1000) comprises a third separator (400) and a fourth separator (500); wherein at the starting segment of the electrode assembly (100), the third separator (400) separates the positive electrode plate (14) from the one of the two single-sided electrode plates (300); and at the ending segment of the electrode assembly (100), the fourth separator (500) separates the positive electrode plate (14) from the other of the two single-sided electrode plates (300); and the housing (200) is made of steel, and the two single-sided electrode plates (300) have the negative polarity.

12. The secondary battery (1000) according to claim 10, **characterized in that** the housing (200) is made of an aluminum laminated film, and the two single-sided electrode plates (300) have a positive polarity.

13. A secondary battery (1000), **characterized in that** the secondary battery (1000) comprises:
a housing (200), wherein the housing (200) has an accommodation cavity (201); and
an electrode assembly (100) obtained by the method according to any one of claims 5 to 8, wherein the electrode assembly (100) is disposed in the accommodation cavity (201);
the secondary battery (1000) further comprises two single-sided electrode plates (300), and the two single-sided electrode plates (300) are disposed on a side of a starting segment and a side of an ending segment of the electrode assembly (100) respectively; and the side of the starting segment and the side of the ending segment of the electrode assembly (100) being facing away from an interior of the electrode assembly (100); and each single-sided electrode plate (300) comprises a second current collector (310) and a third active material layer (320), wherein the third active material layer (320) is disposed on a surface of the second current collector (310) that faces towards the interior of the electrode assembly (100).

14. The secondary battery (1000) according to claim 13, **characterized in that**, along the thickness direction of the electrode assembly (100), the positive electrode plate (14) is further disposed between one of the two single-sided electrode plates (300) and the starting segment of the electrode assembly (100), and between the other of the two single-sided electrode plates (300) and the ending segment of the electrode assembly (100); the secondary battery (1000) comprises a third separator (400) and a fourth separator (500); wherein at the starting segment of the electrode assembly (100), the third separator (400) separates the positive electrode plate (14) from the one of the two single-sided electrode plates (300); and at the ending segment of the electrode assembly (100), the fourth separator (500) separates the positive electrode plate (14) from the other of the two single-sided electrode plates (300); and the housing (200) is made of steel, and the two single-sided electrode plates (300) have the negative polarity.

15. The secondary battery (1000) according to claim 13, **characterized in that** the housing (200) is made of an aluminum laminated film, and the two single-sided electrode plates (300) have a positive polarity.
